# EUROPEAN PATENT APPLICATION

(11) **EP 1 729 266 A2**
(43) Date of publication of application: **06.12.2006**
(21) Application number: 05255245.2
(22) Date of filing: 25.08.2005
(51) Int. Cl.: G07F 7/10

(54) **RFID tag and RFID tag managing system and method**

(30) Priority: 13.05.2005 JP 2005141480
(71) Applicant: FUJITSU LIMITED, Kawasaki-shi, Kanagawa 211-8588 (JP)
(72) Inventor: Sakai, Atsushi, Fujitsu Limited, Kawasaki-shi, Kanagawa 211-8588 (JP); Yasui, Yutaka, Fujitsu Limited, Kawasaki-shi, Kanagawa 211-8588 (JP); Hasebe, Takayuki, Fujitsu Limited, Kawasaki-shi, Kanagawa 211-8588 (JP)
(74) Representative: Hitching, Peter Matthew

(57) **Abstract**

A radio tag system including at least one radio tag (10) that includes a plurality of data areas and a key storage area that stores key information corresponding to at least one data area; and a managing unit (100) that manages access to the radio tag, and that includes a request receiving unit that receives from a user, a request to issue key information that allows access to one of the data areas, and an issuing unit (140) that issues the key information in response to the request received.

## Description

The present invention relates to a radio tag that can be accessed by a plurality of users, and information written in the radio tag by a user is prevented from being leaked to other users.

In recent years, systems that use radio tags have been actively developed in various fields. For example, Japanese Patent Application Laid-Open No. 2000-285170 discloses a system that uses radio tags for managing life cycles of commodities.

However, when a plurality of users use one radio tag, all the users can read out all pieces of information stored in the radio tag, and hence, there is a problem in that information is leaked among the users.

Preferred embodiments of the present invention seek to at least mitigate the problems in the conventional technology.

A radio tag according to an embodiment of one aspect of the present invention includes a plurality of data areas; and a key storage area that stores key information corresponding to at least one data area, wherein access to the one data area is allowed if key information corresponding to the one data area is provided.

A radio tag system according to an embodiment of another aspect of the present invention includes at least one radio tag that includes a plurality of data areas; and a key storage area that stores key information corresponding to at least one data area; and a managing unit that manages access to the radio tag, and that includes a request receiving unit that receives a request to issue key information that allows access to at least one of the data areas in the radio tag; and an issuing unit that issues the key information in response to the request.

According to an embodiment of still another aspect of the present invention, a method for managing access to at least one radio tag, the radio tag including a plurality of data areas, and a key storage area that stores key information corresponding to at least one data area includes receiving from a user, a request to issue a key that allows access to one of the data areas; and issuing a key in response to the request received.

For a better understanding of the present invention, and to show how the same may be carried into effect, reference will now be made, by way of example, to the accompanying drawings, in which:-
FIG. 1 is a functional block diagram of a radio tag system according to an embodiment of the present invention;
FIG. 2 is a functional block diagram of a radio tag managing apparatus according to the embodiment;
FIG. 3 is a diagram of an example of a contract information DB;
FIG. 4 is a diagram of data areas of a radio tag;
FIG. 5 is a diagram of an example of a key information database;
FIG. 6 is a flowchart of a process procedure of a contract process and a key issuance process performed by the radio tag managing apparatus;
FIG. 7 is a flowchart of a process procedure of a key return process performed by the radio tag managing apparatus;
FIG. 8 is a flowchart of a process procedure of an expiration process for a key, performed by the radio tag managing apparatus; and
FIG. 9 is a functional block diagram of a computer that executes a radio tag managing program.

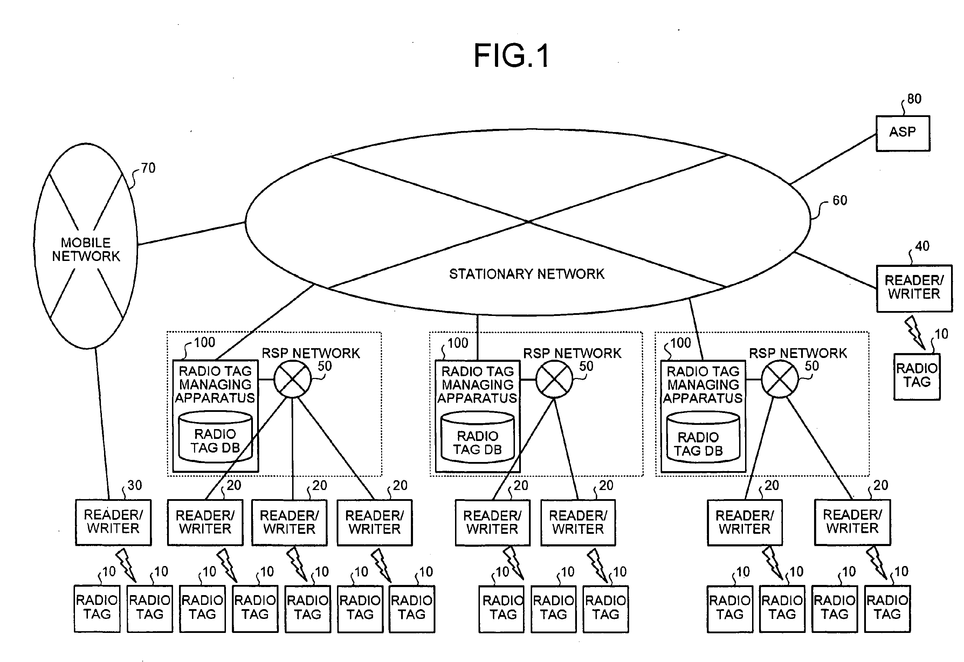

FIG. 1 is a functional block diagram of the radio tag system according to this embodiment. As shown in the figure, the radio tag system includes a plurality of radio tags 10, a plurality of reader/writers 20, 30, and 40, a plurality of radio tag managing apparatuses 100 connected by a stationary network 60, and a mobile network 70 connected to the stationary network 60 and the reader/writers 30.

An RFID service provider (RSP) providing a radio tag service (RFID service) uses the radio tag managing apparatus 100 to store information of the radio tags 10 in a radio tag database (DB) and manage the information. The radio tag managing apparatus 100 can control a large number of the reader/writers 20 through an RSP network 50, and read and write the information of the radio tags 10 through the reader/writers 20.

The RSP supplies the radio tag 10 to a user, and gives the user an authority for using data areas of the radio tags 10 based on a contract with the user. The radio tag 10 has a plurality of data areas, and gives the user the authority for using data areas for each of the data areas. In other words, a plurality of users can use the radio tag 10. Note that, if a user desires, the RSP can also give the user an authority for using the reader/writers 20, the radio tag managing apparatus 100, and the RSP network 50. The RSP can also provide an Application Service Provider (ASP) 80 with the radio tag 10 or the like.

The radio tag managing apparatus 100 can control the reader/writers 20 of other RSPs in cooperation with the radio tag managing apparatuses 100 of the other RSPs through the stationary network 60. The radio tag managing apparatus 100 can also exchange data with the radio tags 10 of other RSPs.

In a small-scale system, the reader/writers 20 may be arranged in one retail shop. In a large-scale system, the reader/writers 20 may be arranged in multinational corporations distributed all over the world. In the large-scale system, a plurality of radio tag managing apparatuses 100 may be arranged in a distributed manner.

The reader/writers 30 and 40 are owned by individuals. The reader/writer 30 may be, for example, a reader/writer integrated in a cellular phone. The reader/writer 30 is connected to the radio tag managing apparatus 100 through the mobile network 70 and the stationary network 60. The reader/writer 40 may be, for example, a reader/writer connected to a personal computer at home. The reader/writer 40 is connected to the radio tag managing apparatus 100 through the stationary network 60. An individual can write information of the radio tag 10 of his/her own article, and write information in the radio tag 10 using these reader/writers.

First, a user of the radio tag system according to this embodiment enters into a contract with the RSP, receives the radio tag 10 from the RSP, acquires a key for one of the many data areas of the radio tag 10, and the user is permitted to use that data area. Note that the user can establish a radio tag system using a reader/writer and his/her own computer system. If necessary, the user can also establish a radio tag system using the reader/writer 20, the radio tag managing apparatus 100, the RSP network 50, and the like.

For example, a manufacturer of personal computers attaches the supplied radio tag 10 to a semi-finished product, or a product of a personal computer. The manufacturer uses the radio tag 10 for customization and production management in a manufacturing process as well as inventory management. When the manufacturer ships a commodity with the radio tag 10 attached to it, the manufacturer erases information of a data area in the radio tag 10, and returns a key for the data area to the RSP, whereby the use ends according to the contract. The next user of the commodity can use the data area by entering into a radio tag use contract similar to the contract held by the previous user.

Note that, for traceability of a commodity, information may be stored over the entire life cycle of the commodity. A part of the data areas of the radio tag 10 may be set such that anybody can read information out of that part, and even the manufacturer can not erase the information at the time of shipping the commodity.

In the radio tag system according to this embodiment, a plurality of companies and individuals can share information about a commodity. For example, when a consumer informs a manufacturer of deficiency in a commodity, the consumer can write a state of the deficiency in the radio tag 10, and can have a home delivery service deliver the radio tag 10 to a complaint-handling counter of a shop.

The manufacturer secures one of the data areas in the radio tag 10 as an area for writing deficiency, and another data area as a common area that anybody can read. When a complaint is notified, the manufacturer discloses a key to the consumer such that the consumer can write deficiency in the area meant for writing deficiency. The consumer writes information about the deficiency in the radio tag 10 using the key. At the same time, the consumer writes information about delivery in the common area, and has a home delivery service deliver the radio tag 10 to the manufacturer. Being able to read information necessary for the delivery from the radio tag 10, the home delivery service can deliver the radio tag 10. However, the home delivery service cannot read the information about the deficiency.

Thus, because the manufacturer shares the key with only the owner of the commodity, the manufacturer can acquire the information on the deficiency from the consumer without leaking the information to others. In the same way, a plurality of companies can share the data areas of the radio tag 10.

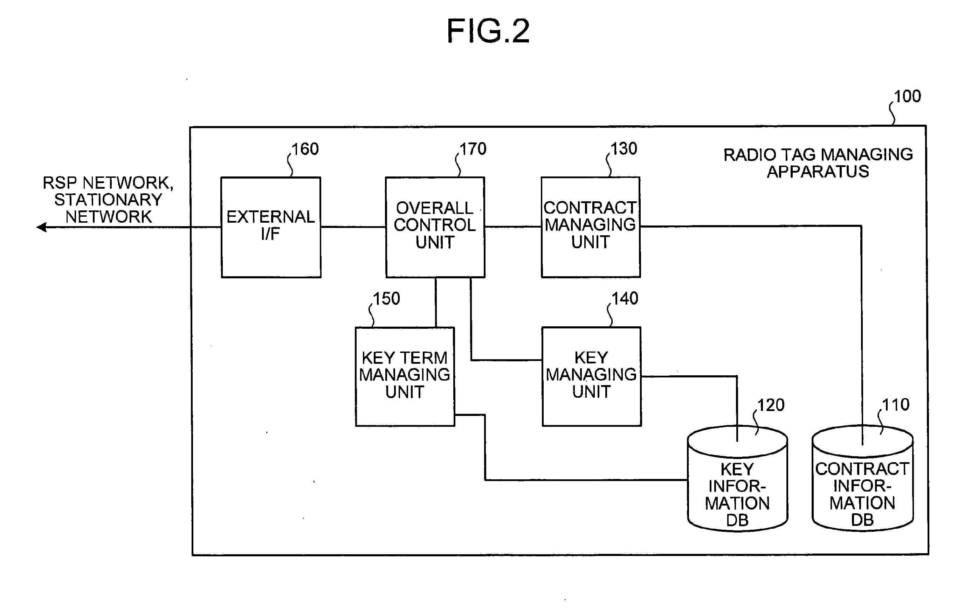

FIG. 2 is a functional block diagram of the constitution of the radio tag managing apparatus 100 according to this embodiment. As shown in the figure, the radio tag managing apparatus 100 includes a contract information DB 110, a key information DB 120, a contract managing unit 130, a key managing unit 140, a key term managing unit 150, an external interface (I/F) 160, and an overall control unit 170. The contract information DB 110 and the key information DB 120 correspond to the radio tag DB shown in FIG. 1.

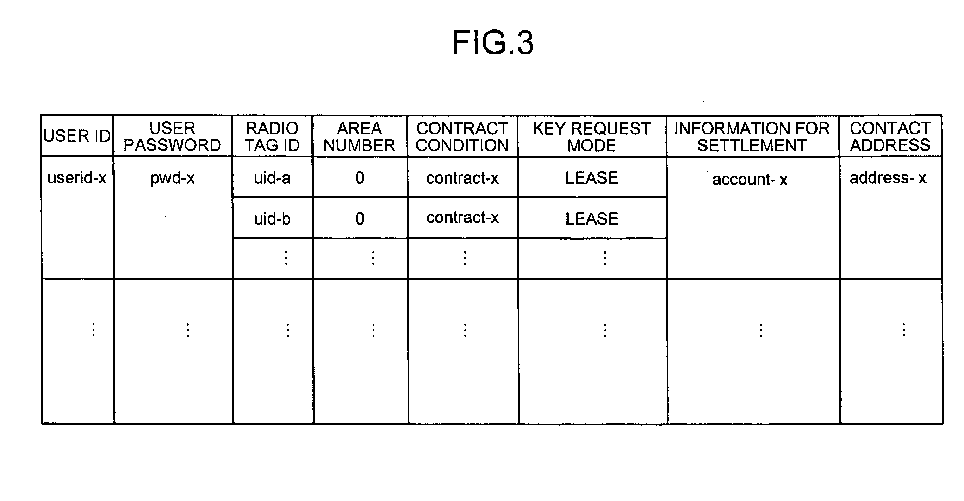

FIG. 3 is a diagram of an example of the contract information DB 110. As shown in the figure, the contract information DB 110 stores, for each user, a user ID for identifying the user, a user password for authenticating the user, a radio tag ID and an area number indicating the radio tag 10 and a data area that the user can use, contract conditions for using the radio tag 10 such as the number of times of writing in the data area, a key request mode indicating whether a lending period for a key is permanent or limited, information for settlement of accounts for use of the radio tag 10, a contact address indicating a mailing address of the user.

For example, a user with the user ID "userid-x" and the user password "pwd-x" uses a data area with the radio tag ID "uid-a" and the area number "0". For the user, the contract condition is "contract-x", the key request mode is "lease", the information for settlement is "account-x", and the contact address is "address-x".

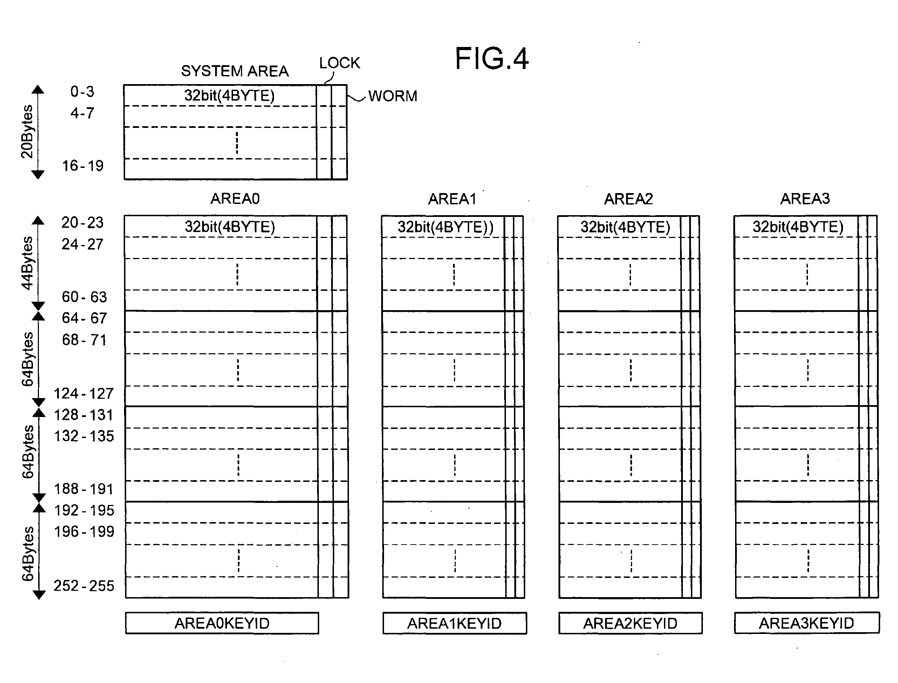

FIG. 4 is a diagram of data areas of the radio tag 10. As shown in the figure, the radio tag 10 has a system area, in which a UID and the like are written, and four data areas "area 0" to "area 3". The radio tag 10 also includes areas "area 0 key ID" to "area 3 key ID", in which area key IDs are stored, in association with the respective data areas. Only when a key ID designated in a read/write request coincide with the area key IDs stored, it is possible to perform read/write to the respective data areas. However, by setting an area key ID stored in the radio tag 10 to a specific value, it is also possible to perform read/write to a data area corresponding to the area key ID freely.

The radio tag 10 includes, every four bytes, a LOCK bit and a Write Once Read Many (WORM) bit for controlling writing of data. When the LOCK bit is "0", it is possible to write data in the radio tag 10. However, when the LOCK bit is "1", it is not possible to write data in the radio tag 10. When the WORM bit is "0", there is no limitation on the number of times of writing. However, when the WORM bit is "1", once data is written in the radio tag 10, the LOCK bit is rewritten to "1", and the data cannot be overwritten.

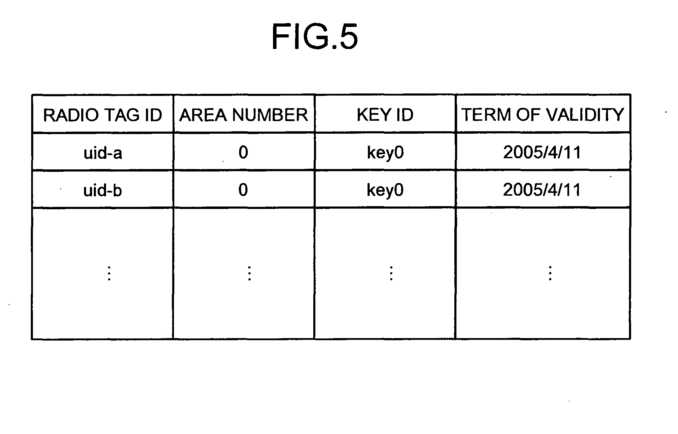

FIG. 5 is a diagram of an example of the key information DB 120 that stores information on a key rented out to a user. As shown in the figure, the key information DB 120 stores, for each data area of the radio tag 10, a radio tag ID, an area number, and a key ID of a key rented out to a user. The key information DB 120 also stores a term of validity for a key rented out, and stores "returned" as a term of validity for a key not rented out.

For example, for a key with the radio tag ID "uid-a" and the area number "0", the key ID is "key 0" and the term of validity is April 11, 2005. Note that it is assumed that a key ID registered in the key information DB 120 is written in the radio tag 10 as an area key ID.

The contract managing unit 130 manages the radio tag 10, and a data area for which the RSP enters into a contract for use with a user, using the contract information DB 110. The contract managing unit 130 performs a process of providing a key to the user and return of the key from the user. Note that the contract managing unit 130 does not issue a key to, for example, a user who has not observed a contract in the past.

The contract managing unit 130 manages the radio tag 10, and a data area for which the RSP enters into a contract for use with a user, using the contract information DB 110, whereby each data area of the radio tag 10 can be used by a different user.

The key managing unit 140 manages a key rented out to a user using the key information DB 120. The key managing unit 140 acquires a key from the key information DB 120 and issues the key to the user. The key managing unit 140 performs a process for registering a term of validity of the key in the key information DB 120, and a return process for changing a term of validity in the key information DB 120 to "returned" for a returned key.

The key term managing unit 150 manages a term of a key rented out to a user. Specifically, the key term managing unit 150 searches through the key information DB 120 periodically to find out a key with an expired term of validity. This makes it possible to urge a user to return the key.

The external I/F 160 communicates with a user, the reader/writers 20, and the like through the stationary network 60 and the RSP network 50. For example, the external I/F 160 receives a request to issue a key from a user, and transmits an issued key to the user.

The overall control unit 170 controls the entire radio tag managing apparatus 100. Specifically, the overall control unit 170 performs shift of control among functional units, delivery of data among the functional units and storing units, and the like to thereby cause the radio tag managing apparatus 100 to function as one apparatus.

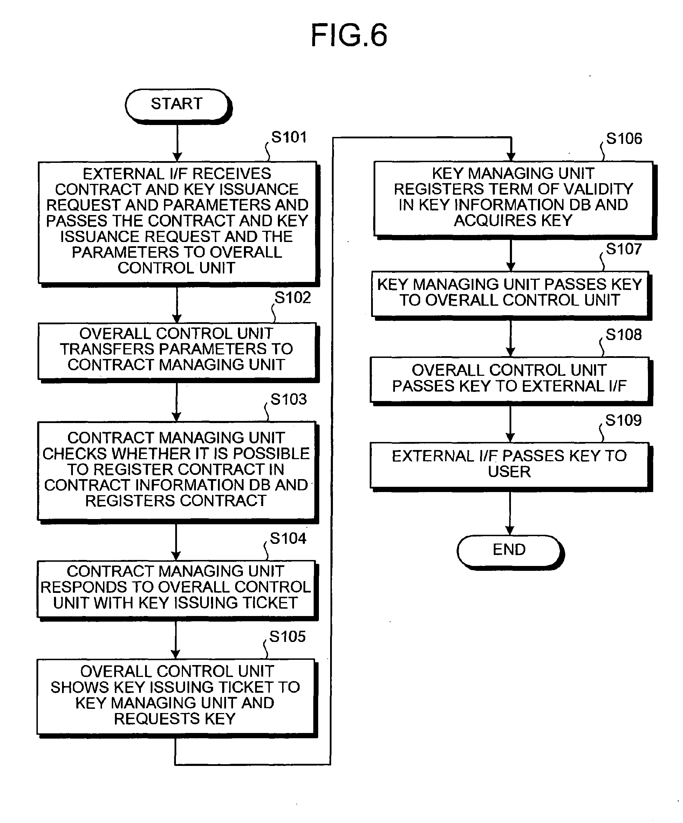

FIG. 6 is a flowchart of the process procedure for contract process and key issuance process by the radio tag managing apparatus 100 according to this embodiment.

As shown in the figure, in the radio tag managing apparatus 100, the external I/F 160 receives contract and key issuance requests and parameters, and passes the contract and key issuance requests and the parameters to the overall control unit 170 (step S101). The parameters include authentication information for a user, a radio tag ID and an area number of a data area for which a key is issued, a key request mode, a term of validity, contract conditions, information for settlement, and a contact address.

The overall control unit 170 transfers the contract and key issuance requests to the contract managing unit 130 together with the parameters (step S102). The contract managing unit 130 checks whether it is possible to enter into a contract, based on the parameters and a blacklist in which defaulters of contracts are registered. If it is possible to enter into a contract, the contract managing unit 130 registers contract information in the contract information DB 110, based on the parameters (step S103).

The contract managing unit 130 responds to the overall control unit 170 with a key issuing ticket (step S104). The overall control unit 170 shows the key issuing ticket to the key managing unit 140, and requests a key (step S105). The key issuing ticket includes a radio tag ID and an area number for requesting issuance of a key and a term of validity of the key.

The key managing unit 140 issues the key and registers the term of validity in the key information DB 120 (step S106). The key managing unit 140 passes the key to the overall control unit 170 (step S107). Specifically, the key passed to the overall control unit 170 is a key ID. The overall control unit 170 passes the key to the external I/F 160 (step S108). The external I/F 160 passes the key to the user (step S109).

Thus, the contract managing unit 130 registers contract information in the contract information DB 110, and the key managing unit 140 issues a key for each data area and registers a term of validity of the key in the key information DB 120. Consequently, it is possible to manage users and keys in association with the respective data areas of the radio tag 10.

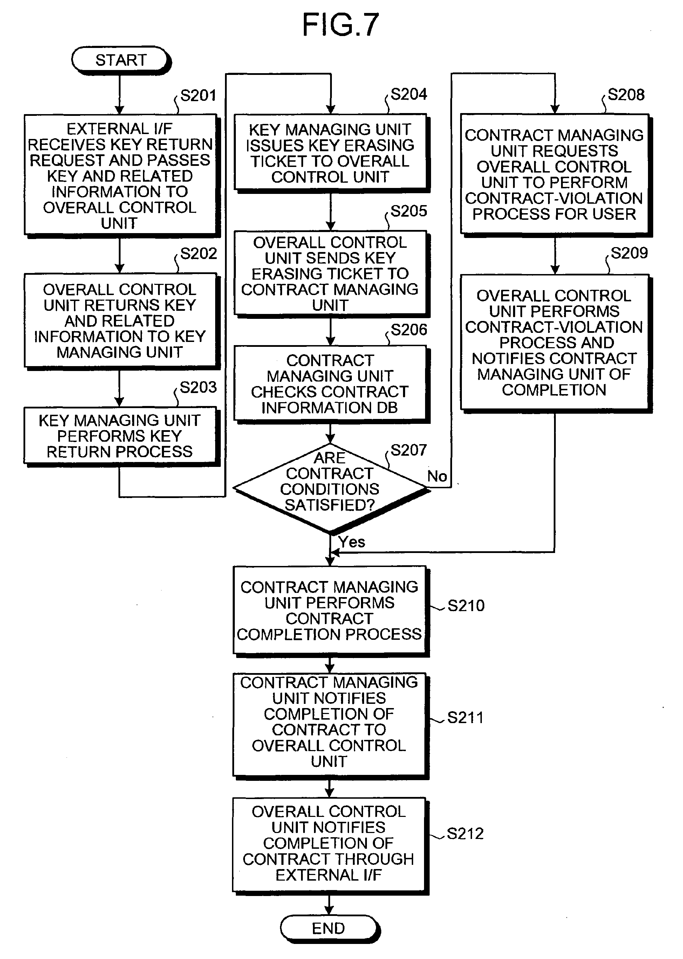

FIG. 7 is a flowchart of the process procedure for the key return process performed by the radio tag managing apparatus 100 according to this embodiment.

As shown in the figure, in the radio tag managing apparatus 100, the external I/F 160 receives a key return request, and passes a key and related information included in the key return request to the overall control unit 170 (step S201). The overall control unit 170 returns the key and the related information to the key managing unit 140 (step S202). The related information includes information on contract conditions such as a radio tag ID, an area number, the number of times of writing in a data area, and the like.

The key managing unit 140 performs the key return process for changing a term of validity in the key information DB 120 to "returned" (step S203). The key managing unit 140 issues a key erasing ticket to the overall control unit 170 (step S204). The key erasing ticket includes the related information.

The overall control unit 170 sends the key erasing ticket to the contract managing unit 130 (step S205). The contract managing unit 130 checks the contract information DB 110 (step S206), and judges whether the returned key satisfies the contract conditions, such as the number of times of writing in a data area (step S207).

If the returned key does not satisfy the contract conditions, the contract managing unit 130 requests the overall control unit 170 to perform a contract-violation process for the user (step S208). The overall control unit 170 performs the contract-violation process, and notifies the contract managing unit 130 of completion of the process for violation of contract (step S209). As the contract-violation process, for example, the overall control unit 170 registers the user in a blacklist.

The contract managing unit 130 performs contract completion process such as erasing of information corresponding to the key returned from the contract information DB 110 (step S210). The contract managing unit 130 notifies the overall control unit 170 of completion of the contract (step S211). The overall control unit 170 notifies the user of the completion of the contract through the external I/F 160 (step S212).

Thus, the key managing unit 140 changes the term of validity in the key information DB 120 to "returned" for the returned key, and the contract managing unit 130 erases the information corresponding to the key returned from the contract information DB 110. Consequently, it is possible to open a data area, the contract of which is completed, to other users.

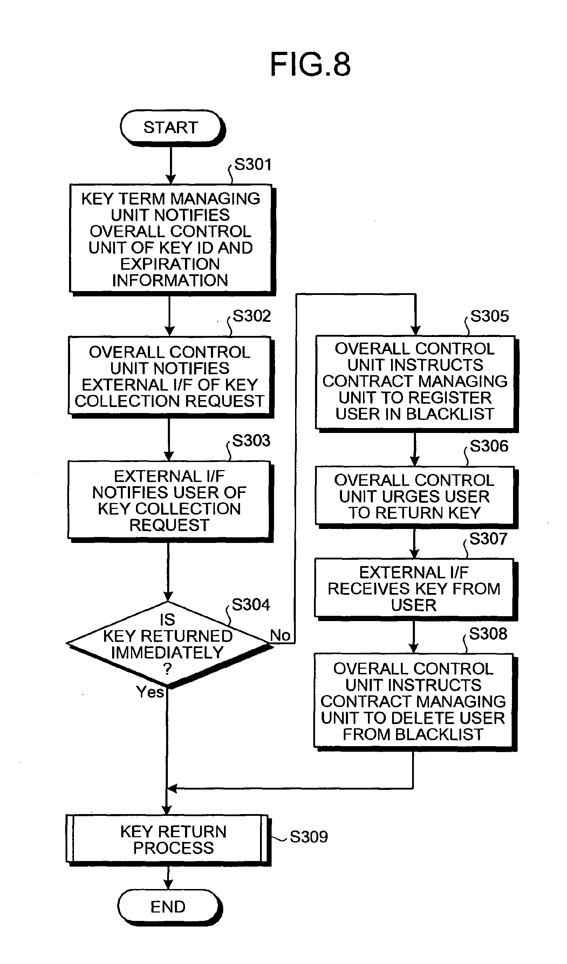

FIG. 8 is a flowchart of the process procedure for expiration process for a key, performed by the radio tag managing apparatus 100.

As shown in the figure, in the radio tag managing apparatus 100, when the key term managing unit 150 finds a key with an expired term of validity, the key term managing unit 150 notifies the overall control unit 170 of a key ID and expiration information of the key (step 5301). The overall control unit 170 notifies the external I/F 160 of a key collection request (step S302). The external I/F 160 notifies the user of the key collection request (step 5303).

If the key is returned immediately ("Yes" at step S304), the overall control unit 170 performs the key return process shown in FIG. 7 (step S309). On the other hand, if the key is not returned immediately ("No" at step S304), the overall control unit 170 instructs the contract managing unit 130 to register the user in a blacklist (step S305), and urges the user to return the key (step S306). When the external I/F 160 receives the key returned from the user (step S307), the overall control unit 170 instructs the contract managing unit 130 to delete the user from the blacklist (step S308), and performs the key return process shown in FIG. 7 (step S309).

In this way, the key term managing unit 150 notifies the overall control unit 170 of the key with an expired term of validity, and the overall control unit 170 notifies the user of a key return request through the external I/F 160. Consequently, it is possible to prevent the key with an expired term of validity from being left unreturned.

As described above, in this embodiment, the radio tag 10 includes plural data areas, and the areas for storing keys corresponding to the respective data areas. The contract managing unit 130 manages a user for each of the data areas using the contract information DB 110, the key managing unit 140 issues a key to the user, for using the data area, using the key information DB 120, and the user uses a radio tag ID using the key. Thus, the user is capable of accessing only that data area for which the key is acquired. Even when a plurality of users use the radio tag 10, it is possible to prevent information written in the radio tag 10 by a user, from being used by the other users.

Note that, in this embodiment, the radio tag managing apparatus is explained. However, it is possible to obtain a radio tag managing program having the same functions as the radio tag managing apparatus by realizing the constitution held by the radio tag managing apparatus with software. Thus, a computer that executes this radio tag managing program is explained next.

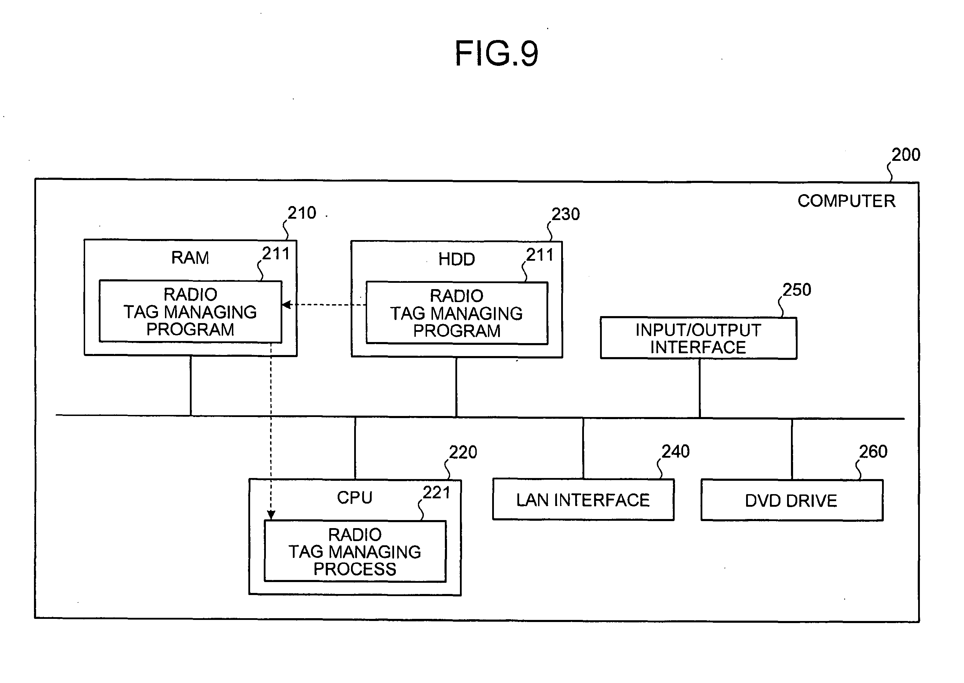

FIG. 9 is a functional block diagram of a constitution of the computer that executes the radio tag managing program according to this embodiment. As shown in the figure, a computer 200 includes a RAM 210, a CPU (central processing unit) 220, an HDD 230, a LAN (local area network) interface 240, an input/output interface 250, and a DVD drive 260.

The RAM 210 stores programs, intermediate results during execution of the programs, and the like. The CPU 220 reads out the program from the RAM 210 and executes the program.

The HDD 230 is a disk device that stores programs and data. The LAN interface 240 connects the computer 200 to other computers through a LAN.

The input/output interface 250 connects an input device such as a mouse or a keyboard and a display device. The DVD drive 260 reads data from and writes data into a DVD.

A radio tag managing program 211 executed in the computer 200 is stored in a DVD, read out from the DVD by the DVD drive 260, and installed in the computer 200.

Alternatively, the radio tag managing program 211 is stored in databases of other computer systems connected through the LAN interface 240, read out from these databases, and installed in the computer 200.

The radio tag managing program 211 installed is stored in the HDD 230, read out to the RAM 210, and executed by the CPU 220 as a radio tag managing process 221.

In the explanation of this embodiment, a user designates a radio tag and a data area to request issuance of a key. However, the present invention is not limited thereto. The present invention can be applied in the same manner, when a user designates a necessary size of an area to request use of a radio tag, and the radio tag managing apparatus provides the user with the radio tag and a data area together with a key.

According to one aspect of the present invention, even if a plurality of users use a radio tag, it is possible to prevent information written in the radio tag by a user from being leaked to other users.

Moreover, it is possible to use the data areas effectively.

Furthermore, it is possible to take measures not to issue a key to a violator of the contract.

Furthermore, it is possible to make it less likely that a key issued is left unreturned.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A radio tag comprising:
a plurality of data areas; and
a key storage area that stores key information corresponding to at least one data area, wherein access to the one data area is allowed if key information corresponding to the one data area is provided.

2. A radio tag system comprising:
at least one radio tag that includes
a plurality of data areas; and
a key storage area that stores key information corresponding to at least one data area; and
a managing unit that manages access to the radio tag, and that includes
a request receiving unit that receives a request to issue key information that allows access to at least one of the data areas in the radio tag; and
an issuing unit that issues the key information in response to the request.

3. The radio tag system according to claim 2, wherein the managing unit includes
an input unit that receives an input from a user; and
an access permission determining unit that determines whether access to a data area in a radio tag is to be permitted, based on a comparison of the input and the key information.

4. The radio tag system according to claim 3, wherein
the access permission determining unit permits access to a data area of a radio tag of which the key information matches with the input.

5. The radio tag system according to claim 4, wherein
the key information and the input include at least one of a user ID, a tag ID, a data area ID, an expiry date indicating a date till which access to the data area is permitted, and an access limit indicating a number of times access to the data area is permitted.

6. The radio tag system according to claim 3, wherein
the access permission determining unit permits access to a data area of a radio tag corresponding to which key information has not been stored in the key storage area without performing a comparison.

7. The radio tag system according to any one of claims 2 to 6, further comprising:
an accepting unit that accepts return of the key information issued, and performs a return process for the key returned.

8. The radio tag system according to claim 7, wherein
the issuing unit sets contract conditions related to use of the key information, before issuing the key information, and
the accepting unit judges whether the key information returned satisfies the contract conditions, wherein if the contract conditions are not satisfied, the accepting unit performs a contract-violation process.

9. The radio tag system according to claim 8, wherein
the contract conditions include a maximum number of times data is written in a data area, and
the accepting unit judges whether a number of times data is written in a data area that corresponds to the key information returned exceeds the maximum number, and if the number of times exceeds the maximum number, the accepting unit performs the contract-violation process.

10. The radio tag system according to any one of claims 2 to 9, wherein the issuing unit sets an expiry date for accessing the data area, and the managing unit further comprising:
an expiry-processing unit that notifies the user and registers the user in a black list, if the expiry date has passed.

11. The radio tag system according to claim 10, wherein
the issuing unit confirms that the user is not registered in the black list, before issuing the key information.

12. A method for managing access to at least one radio tag, the radio tag including a plurality of data areas, and a key storage area that stores key information corresponding to at least one data area, the method comprising:
receiving from a user, a request to issue a key that allows access to one of the data areas; and
issuing a key in response to the request received.

13. The method according to claim 12, further comprising:
receiving an input from a user; and
determining whether access to a data area in a radio tag is to be permitted based on a comparison of the input and the key information.

14. The method according to claim 13, wherein
the determining includes permitting access to a data area of a radio tag of which the key information matches with the input.

15. The method according to claim 14, wherein
the key information and the input include at least one of a user ID, a tag ID, a data area ID, an expiry date indicating a date till which access to the data area is permitted, and an access limit indicating a number of times access to the data area is permitted.

16. The method according to claim 13, wherein the determining includes permitting access to a data area of a radio tag corresponding to which key information has not been stored without performing a comparison.

17. The method according to any one of claims 12 to 16, further comprising:
accepting return of the key information issued, and performing a return process for the key returned.

18. The method according to claim 17, wherein
the issuing includes setting contract conditions related to use of the key information, before issuing the key information, and
the accepting includes judging whether the key information returned satisfies the contract conditions, wherein if the contract conditions are not satisfied, the accepting includes performing a contract-violation process.

19. The method according to claim 18, wherein
the contract conditions include a maximum number of times data is written in a data area, and
the accepting includes judging whether a number of times data is written in a data area that corresponds to the key information returned exceeds the maximum number, and if the number of times exceeds the maximum number, the performing includes performing the contract-violation process.

20. The method according to any one of claims 12 to 19, wherein the issuing includes setting an expiry date for accessing the data area, and the method further comprising:
expiry-processing that includes notifying the user and registering the user in a black list, if the expiry date has passed.
